(19) Europäisches Patentamt
European Patent Office
Office européen des brevets

(11) **EP 4 282 553 A1**

(12) **EUROPEAN PATENT APPLICATION**
published in accordance with Art. 153(4) EPC

(43) Date of publication:
**29.11.2023 Bulletin 2023/48**

(51) International Patent Classification (IPC):
*B21D 22/20* (2006.01)    *B21D 22/26* (2006.01)
*B21D 53/00* (2006.01)

(21) Application number: **21926705.1**

(52) Cooperative Patent Classification (CPC):
**B21D 22/20; B21D 22/26; B21D 53/00**

(22) Date of filing: **26.10.2021**

(86) International application number:
**PCT/JP2021/039478**

(87) International publication number:
**WO 2022/176276 (25.08.2022 Gazette 2022/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.02.2021 JP 2021026615**

(71) Applicant: **JFE Steel Corporation
Tokyo 100-0011 (JP)**

(72) Inventors:
• **NAKAGAWA, Kinya
Tokyo 100-0011 (JP)**
• **SHINMIYA, Toyohisa
Tokyo 100-0011 (JP)**

(74) Representative: **Haseltine Lake Kempner LLP
Bürkleinstrasse 10
80538 München (DE)**

(54) **MOLDED ARTICLE PRODUCTION METHOD, BLANK, AND POLYGONAL TUBE DEEP DRAWING MOLDED ARTICLE**

(57)    The present invention makes it possible to provide a formed article having a polygonal tube shape with a deep forming depth and an arcuate R of a ridge by press working by deep drawing without the need for ironing. A formed article (1) having a polygonal tube shape is produced by performing polygonal tube deep drawing on a blank (10) made of a steel sheet, the formed article (1) including a bottom surface part (2) having a polygonal shape, a side wall (3) including a straight side part (3A) continuous with a side of the bottom surface part (2) and a vertical ridge (3B) connecting ends, in the right-left direction, of adjacent straight side parts, and a flange (4) continuous with the side wall (3). A side of a flange region to become the flange in the blank (10) includes a notch (11), and the notch (11) is formed on the side of a part of the flange region, the part being continuous with a region at a position closer to the vertical ridge (3B) than a position of a central part in the right-left direction in the straight side part (3A) .

FIG. 1

## Description

Technical Field

The present invention relates to press working by deep drawing without the need for ironing. The present invention relates to a technology to produce a formed article of a polygonal tube shape having a deep forming depth, for example. The present invention is a technology suitable for a battery case for a large battery to be provided in an automobile, for example.

Background Art

From the viewpoint of environmental pollution control measures, fuel efficiency improvement, and the like, motorizing of automobiles advances. Electric automobiles have many parts structurally different from conventional gasoline automobiles. A particularly large difference is that electric automobiles are provided with a battery and a motor in substitution for a gas tank and an engine. The movable distance of an electric automobile largely depends on a mountable battery capacity. Because of this, it is necessary for the electric automobile to be equipped with a large battery to lengthen the movable distance. Along with upsizing of the battery, it is necessary to prepare a battery case having a large volume.

Here, various examinations have been performed conventionally to manufacture a battery case having a large volume. Generally, a battery case has a polygonal tube shape, and as the battery case has a deeper polygonal tube, its volume increases more.

As a technique to form a polygonal tube having a deep forming depth by use of a steel sheet, it is conceivable to apply the methods described in PTLS 1 to 3, for example.

PTL 1 describes a technique to deepen the forming depth by performing ironing on a side wall in a drawing step in a multi-process. PTL 2 describes a technique to deepen the forming depth by denting a punch bottom (the vicinity of a bottom-surface shoulder part) once during forming. PTL 3 describes a technique to heighten the forming height by performing main forming after a strain is sufficiently introduced into a punch bottom by preforming into a shape calculated from sectional line lengths of respective parts in bulging.

Citation List

Patent Literature

PTL 1: JP 6787013 B
PTL 2: JP H8-66730 A
PTL 3: JP 5867657 B

Summary of Invention

Technical Problem

A battery case includes a container having a polygonal tube shape as a main body. In order to increase the volume of the polygonal tube shape, it is effective to deepen the forming depth and to sharpen an R of each ridge (to make a side wall close to the vertical).

Here, the inventors of the present invention found that the following three problems were caused at the time of achieving a deep forming depth and at the time of achieving a sharp curvature radius for a ridge, in deep drawing to form a polygonal tube shape.

A first problem is a crack in the vicinity of a corner shoulder part of a bottom surface part. It is necessary to cause a material to flow toward a side wall from a flange on the outer periphery of the side wall to deepen the forming depth. However, in a case where the flow of the material is not sufficient, a strain is concentrated in the vicinity of the corner shoulder part of the bottom surface part, and a crack occurs.

A second problem is a side wall crack in a corner part. This crack occurs due to the following reason. That is, in a case where the inflow of the material to the side wall is increased by performing corner cutting or the like on a corner of a blank so as to avoid a crack in the vicinity of the corner shoulder part of the bottom surface part, the strain state of the side wall nears a plane strain state. As a result, a forming limit decreases on the side wall of the corner part, and a crack occurs.

A third problem is the occurrence of wrinkle in the vicinity of the corner part. Similarly to the second problem, this is a problem that, when the flow of the material to the side wall of the corner part is increased, the flange in the vicinity of the corner part wrinkles due to the difference in line length.

Further, as performance required for a battery case made of a steel sheet, the battery case should have a rust prevention property as well as the volume of the case. This is because, currently, lithium is often used in batteries for electric automobiles. That is, since lithium may explode due to contact with moisture, a rust prevention property is required. Accordingly, in a case where a battery case is manufactured by use of a steel sheet, it is necessary to use a plating steel sheet for a blank.

Here, in a case where a battery case is manufactured by a step including ironing as represented by PTL 1, it is possible to form plating steel sheet into a polygonal tube shape having a deep forming depth by sharpening the curvature radius of a ridge at the time when the plating steel sheet is formed into a polygonal tube shape. However, there is a problem that the rust prevention property decreases because plating of the plating steel sheet peels off due to ironing.

Further, in a case where forming is performed by the technique disclosed in PTL 2, the forming depth is deepened as compared to a case where forming is performed in a normal method. However, in the method described in PTL 2, after the bottom surface shoulder part is dented once by preforming, forming is performed while the part thus dented is stretched. On this account, the effect obtained by the preforming decreases at the point when the part is fully stretched, and a tensile force occurs in the shoulder part of the bottom surface part. After the effect obtained by the preforming decreases, forming is performed in the same manner as normal deep drawing. Accordingly, the material is required to flow from the flange to obtain a sufficient forming depth, so that there is such a concern that the side wall cracks or the flange wrinkles. In addition, in the method described in PTL 2, the punch bottom cannot be held at a bottom dead center because of the configuration of a die, and therefore, a preforming part may remain behind as wrinkles or the like. Further, in the method described in PTL 2, it is difficult to provide a design in a punch bottom part (the bottom surface part of a formed article) .

The technique disclosed in PTL 3 is effective to deepen the forming depth. However, the method described in PTL 3 is mainly targeted for bulging. Accordingly, the effect is restrictive to a shape that is established only when the material is caused to flow, like the battery case. Further, the method described in PTL 3 cannot deal with the crack of the side wall or the wrinkle of the flange at the time when a formed article having a deep polygonal tube shape with a deep forming depth is manufactured, similarly to the above conventional technologies.

The present invention is accomplished in view of the above problems, and an object of the present invention is to provide a formed article having a polygonal tube shape with a deep forming depth and an arcuate R of a ridge by press working by deep drawing without the need for ironing.

Solution to Problem

In order to achieve the object, an aspect of the invention provides a formed article production method for producing a formed article having a polygonal tube shape by performing polygonal tube deep drawing on a blank made of a steel sheet, the formed article including a bottom surface part having a polygonal shape, a side wall including a straight side part continuous with a side of the bottom surface part and a vertical ridge connecting ends, in a right-left direction, of adjacent straight side parts, and a flange continuous with the side wall. A side of a flange region to become the flange in the blank includes a notch, and the notch is formed in a part of the side of the flange region, the part being continuous with a part of the straight side part that is close to the vertical ridge, such that the notch is formed at a position on each of sides across a position to become the vertical ridge.

Further, an aspect of the present invention provides a formed article production method for producing a formed article having a polygonal tube shape by performing polygonal tube deep drawing on a blank made of a steel sheet, the formed article including a bottom surface part having a polygonal shape, a side wall including a straight side part continuous with a side of the bottom surface part and a vertical ridge connecting ends, in a right-left direction, of adjacent straight side parts, and a flange continuous with the side wall. The formed article production method performs polygonal tube deep drawing by two or more steps. In a preforming step that is a step selected from the two or more steps, polygonal tube deep drawing is performed on the blank to form the blank into a preforming shape constituted by a polygonal tube shape having a forming depth shallower than the formed article, and in a step after the preforming step, out of the two or more steps, polygonal tube deep drawing is performed on the blank formed into the preforming shape in the preforming shape, such that the blank is formed into a shape of the formed article. A side of a bottom surface part of the preforming shape has a length set to be equal to or more than 0.9 times but equal to or less than 1.1 times of a length of a corresponding side of the bottom surface part in the formed article.

Further, an aspect of the present invention provides a blank made of a steel sheet and used when a formed article having a polygonal tube shape is produced by performing polygonal tube deep drawing on the blank, the formed article including a bottom surface part having a polygonal shape, a side wall including a straight side part continuous with a side of the bottom surface part and a vertical ridge connecting ends, in a right-left direction, of adjacent straight side parts, and a flange continuous with the side wall. A side of a flange region to become the flange in the blank includes a notch, and the notch is formed in a part of the side of the flange region, the part being continuous with a region of the straight side part, the region being at a position closer to the vertical ridge than a position of a center part, in a right-left direction, of the straight side part.

Further, an aspect of the present invention provides a blank made of a steel sheet and used when a formed article having a polygonal tube shape is produced by performing polygonal tube deep drawing on the blank, the formed article including a bottom surface part having a polygonal shape, a side wall including a straight side part continuous with a side of the bottom surface part and a vertical ridge connecting ends, in a right-left direction, of adjacent straight side parts, and a flange continuous with the side wall. The blank has a preforming shape constituted by a polygonal tube shape having a forming depth shallower than the formed article, and a side of a bottom surface part of the preforming shape has a length equal to or more than 0.9 times but equal to or less than 1.1 times of a length of a corresponding side of the bottom surface part in the formed article.

Further, an aspect of the present invention provides a polygonal tube deep drawing formed article including a bottom surface part having a polygonal shape, a side wall including a straight side part continuous with a side of the bottom surface part and a vertical ridge connecting ends, in a right-left direction, of adjacent straight side parts, and a flange continuous with the side wall, the polygonal tube deep drawing formed article being made of a steel sheet. The polygonal tube deep drawing formed article is constituted by a deep drawing formed article in which a relationship between a curvature radius R (mm) of a corner part as a boundary between the bottom surface part and the vertical ridge with a forming depth h (mm) satisfies a relationship expressed by inequation (1):

$$h/R \geq 4 \ldots (1).$$

Advantageous Effects of Invention

With the aspects of the present invention, it is possible to provide a formed article of a polygonal tube shape having a deep forming depth and an arcuate-angle ridge by press working by deep drawing without the need for ironing.

Brief Description of Drawings

FIG. 1 is a perspective view illustrating formation of a polygonal tube deep drawing formed article according to an embodiment based on the present invention;
FIG. 2 is a view to describe a deep drawing method;
FIG. 3 is a view to describe an exemplary step of a first embodiment;
FIG. 4 is a plan view illustrating an example of a blank to be applied to conventional polygonal tube deep drawing;
FIG. 5 is a view illustrating an example of a blank according to the embodiment based on the present invention;
FIGS. 6A and 6B are views to describe a problem when no notch is formed;
FIGS. 7A and 7B are views to describe an effect obtained by forming a notch;
FIG. 8 is a view to describe an exemplary step of a second embodiment;
FIG. 9 is a perspective view without fastening the shape of a blank to which a preforming shape is given; and
FIG. 10 is a view to compare formable heights (forming depths).

Description of Embodiments

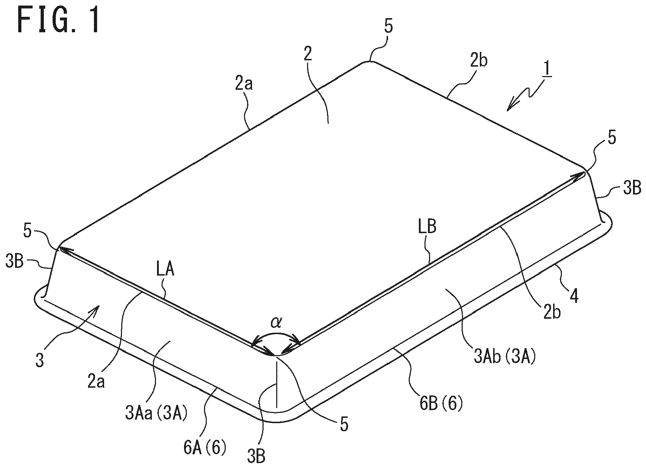

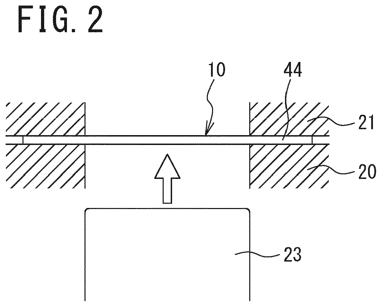

Next will be described embodiments of the present invention with reference to the drawings.
Here, the drawings are schematic, and ratios or the like of magnitudes and lengths of constituents are different from actual ones. Further, the embodiments described below exhibit configurations to embody the technical idea of the present invention, and the technical idea of the present invention does not limit a material, a shape, a structure, and the like of a constituent part to those described below. Various changes can be added to the technical idea of the present invention within a technical scope defined by claims described in Claims.
Further, dimensions formed in each drawing are dimensions to describe the embodiments and do not define the present invention at all.
The present embodiments will be described with reference to a polygonal tube deep drawing formed article 1 (also just referred to as a formed article 1) having a rectangular cross section as an example, as illustrated in FIG. 1. However, the cross-sectional shape of the formed article 1 of the present embodiments is not limited to a rectangular shape and may be other polygonal shapes.
As illustrated in FIG. 1, the formed article 1 includes a polygonal bottom surface part 2, a side wall 3 continuous with the bottom surface part 2, and a flange 4 continuous with a lower edge of the side wall 3. The side wall 3 includes straight side parts 3Aa, 3Ab continuous with respective sides 2a, 2b of the bottom surface part 2, and vertical ridges 3B each connecting respective ends, in the right-left direction, of adjacent straight side parts 3Aa, 3Ab to each other to constitute a corner part. The vertical ridges 3B are continuous with respective vertices 5 at corners of the bottom surface part 2. Note that the corners of the bottom surface part 2 have R by deep drawing.
Here, as illustrated in FIG. 2, polygonal tube deep drawing is performed by press working using a die including a die 21, a blank holder 20, and a punch 23. More specifically, forming is performed by relatively moving the punch 23 in a pressing direction in a state where a flange region 44 to become the flange 4 in the blank 10 is held by the die 21 and the blank holder 20. A forming surface of the punch 23 has a shape following inner surfaces of the bottom surface part 2 and the side wall 3 of the formed article 1. The forming depth of the polygonal tube deep drawing is the depth of the polygonal tube of the formed article 1 subjected to forming.
The blank 10 of the present embodiment is made of a steel sheet. It is preferable that the steel sheet be a plating steel sheet, from the viewpoint of a rust prevention property.
Note that ironing can be omitted from a production method of the formed article 1 according to the present embodiment at the time of the polygonal tube deep drawing. This makes it possible to restrain plating on the surface of the steel sheet from peeling off at the time of forming, and this is one of the features.

[First Embodiment]

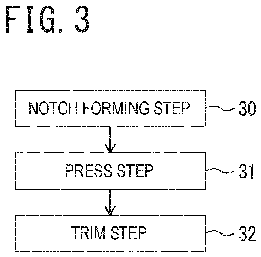

As illustrated in FIG. 3, the production method of the formed article 1 according to the present embodiment includes a notch forming step 30, a press step 31 to perform polygonal tube deep drawing, and a trim step 32.

<Notch Forming Step 30>

In a notch forming step 30, a notch 11 is formed on each side of the blank 10. This step is a cutting step before deep drawing.

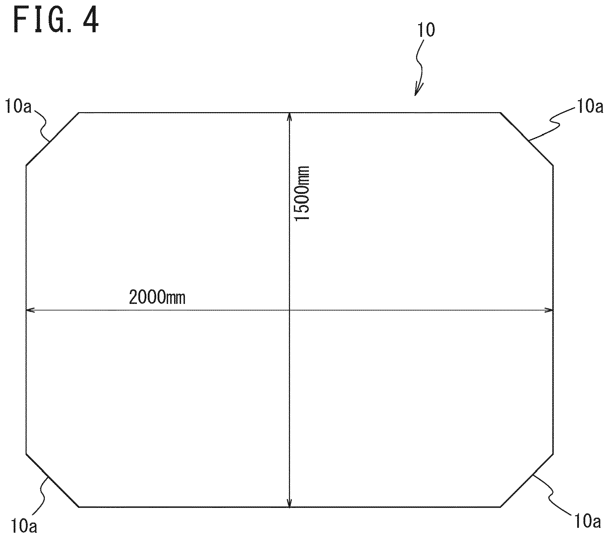

As illustrated in FIG. 4, the normal blank 10 is formed such that corners, of the blank, continuous with respective regions to become the vertical ridges 3B are cut. Hereby, a side of a cut part 10a is formed in the blank 10. By cutting the corners of the blank, cracks in the vicinity of a corner shoulder part of the bottom surface part 2 are restrained.

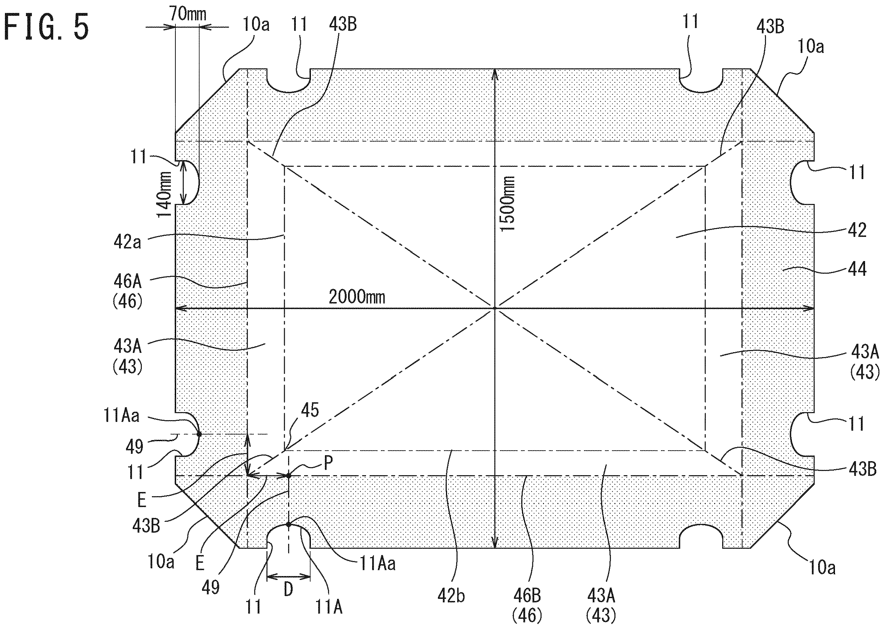

The blank 10 of the present embodiment has a shape in which respective notches 11 are formed on both sides of the cut part 10a, as illustrated in FIG. 5. The shape having the cut parts 10a and the notches 11 should be formed by one cutting process.

As illustrated in FIG. 5, the notches 11 are formed in the flange region 44 (a shaded part in FIG. 5) to become the flange 4 in the blank 10. More specifically, the notches 11 are formed in a region caught by the die 21 and the blank holder 20 at the time of deep drawing.

The notches 11 are each formed on a side of a part, of the flange region 44, that is continuous with a region at a position closer to the vertical ridge 3B than a central part position in the right-left direction in the straight side part 3Aa, 3Ab of the formed article 1. That is, the notches 11 are formed on respective sides of the blank 10, at positions close to a region 43B to become the vertical ridge 3B such that the notches 11 are formed on both sides of the region 43B to become the vertical ridge 3B. A part, of the straight side part 3Aa, 3Ab, that is close to the vertical ridge 3B indicates a part close to an end side of the straight side part 3Aa, 3Ab than a central position of the straight side part 3Aa, 3Ab.

Note that it is preferable that the notches 11 be formed not to include the position of the cut part 10a.

It is preferable that each notch 11 have an opening width D equal to or more than 25% of the forming depth of the formed article 1. The upper limit of the opening width D is preferably a magnitude of 100% or less, for example.

The notch depth of each notch 11 is preferably equal to or more than one third of the opening width D.

Further, the contour shape of a top part 11A of the notch 11 is preferably constituted by an arc as part of a perfect circle or an ellipse or a curved line (that may partially include a straight line) continuous with the arc. It is preferable that the contour of the notch 11 do not include a part such as a sharp corner where the curvature changes steeply.

Further, the shape of the notch 11 may be a symmetric shape or an asymmetric shape in the right-left direction across the depth direction of the notch 11.

In FIG. 5, the notch 11 has a symmetric shape in the right-left direction across the depth direction (a direction along a straight line 49), and the depth direction is a direction perpendicular to a side (a side of the flange region 44) of the blank 10. The notch 11 may be formed diagonally toward the vertical ridge 3B side.

It is preferable that a vertex 11Aa of the notch 11 have a curvature radius equal to or more than 12.5% of the forming depth. The upper limit of the curvature radius of the vertex 11Aa of the notch 11 is equal to or less than twice the opening width D of the notch 11, for example.

It is preferable that the formation position of the notch 11 satisfy the following conditions.

Here consider a boundary line 46 (a ridge part of a boundary between the flange 4 and the straight side part 3Aa, 3Ab in the formed article 1) between the flange region 44 and a region 43 to become the straight side part 3Aa, 3Ab. The boundary line 46 corresponds to a side, of the flange 4, on the straight side part 3Aa, 3Ab side.

Further, assume an intersecting point P between the straight line 49 extended from the vertex 11Aa of the notch 11 in the depth direction of the notch 11 and its nearest boundary line 46. Further, the length of a side, of the bottom surface part 2 in the formed article 1, the side being continuous via the straight side part 3Aa, 3Ab with a part of the flange 4 where the notch 11 is formed, is referred to as a bottom length (see LA, LB in FIG. 1). At this time, a preferred range to form the notch 11 is a range where a distance E (see FIG. 5) of the intersecting point P from an end position, on the vertical ridge 3B side, of the boundary line 46 falls within a range equal to or more than 0 times but equal to or less than 0.2 times of the bottom length.

When the notch 11 is formed on a side of a part, of the flange region 44, that is continuous with a boundary line 46a, a separation distance from an extension line of the boundary line 46A across the corner part to the vertex 11Aa of the notch 11 may be taken as the distance E. The separation distance may be defined as a range equal to or more than 0 times but equal to or less than 0.2 times of the length of the side, of the bottom surface part 2, that is continuous via the straight side part 3Aa, 3Ab with a part of the flange 4 where the notch 11 is formed in the formed article 1.

Note that it is preferable that two notches 11 formed on both sides of the cut part 10a have shapes symmetric to each other in the right-left direction across the region 43B to become the vertical ridge 3B.

<Press Step 31>

In a press step 31, polygonal tube deep drawing is performed on the blank 10 having the notches 11 formed as described above to form the shape of the formed article 1 as a target.

<Trim Step 32>

In a trim step 32, a region having the notches 11 are cut from the flange 4 of the formed article 1 manufactured in the press step 31 to obtain a final product shape.

(Operations and so on)

With the present embodiment, it is possible to manufacture the polygonal tube deep drawing formed article 1 including the flat flange 4 and having a shape with a forming depth deeper than a case of forming by a conventional production method.

In the present embodiment, before deep drawing is performed, a pair of notches 11 is formed for each vertical ridge 3B such that the notches 11 are provided on both sides across the position of the vertical ridge 3B.

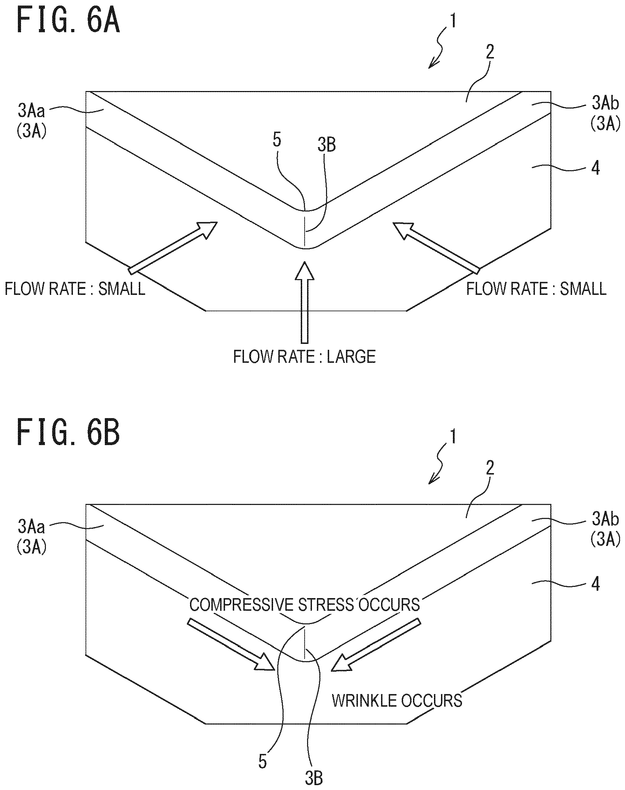

Here, in a case where no notch 11 is formed as illustrated in FIG. 6A, the material flows from the flange 4 toward the side wall 3 such that the flow of the material to the corner part (the vicinity of the vertical ridge 3B) is relatively large, and the flow of the material to the side wall 3 in the vicinity of the corner part is small. Accordingly, as the angle formed between the side wall 3 (3A and 3B) of the formed article 1 and the bottom surface part 2 is brought closer to 90 degrees, or as the forming depth is deepened, a compressive stress at the corner part increases as illustrated in FIG. 6B. This causes cracks or easily causes wrinkles in the flange 4 around the corner part.

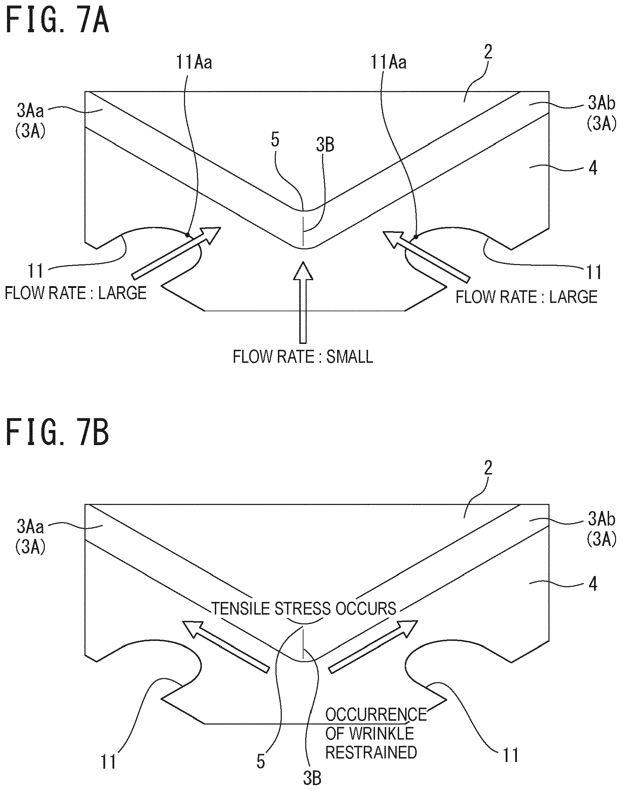

In the meantime, when the notches 11 are formed in the vicinity of the vertical ridge 3B in the blank 10 to be formed like the present embodiment, the material is promoted to flow to the side wall 3 in the vicinity of the corner part as illustrated in FIG. 7A. Hereby, the material sufficiently flows to the side wall 3, and the vertical ridge 3B is compressed in a direction vertical to the pressing direction and deforms in a shape close to a uniaxial tensile state as illustrated in FIG. 7B. As a result, a forming limit improves, so that the side wall 3 can be restrained from cracking.

Further, by introducing the notches 11, as illustrated in FIGS. 7A and 7B, the flow of the material to the side wall 3 in the vicinity of the vertical ridge 3B relatively increases, and the flow of the material to the vertical ridge 3B side decreases. This makes it possible to restrain wrinkles from being formed in the flange near the corner part. Since the occurrence of wrinkles in the flange is restrained, it is possible to make the flange 4 flat at the time when the formed article 1 is completed.

Here, as described above, it is preferable that the opening width D of the notch 11 be equal to or more than 25% of the forming depth of the formed article 1. Further, it is preferable that the curvature radius of the vertex 11Aa of the notch 11 be equal to or more than 12.5% of the forming depth. The reason of these conditions is as follows. The material of the flange 4 flows to the side wall 3 during deep drawing, but in a case where the opening width D of the notch 11 is narrower than 25% of the forming depth, or in a case where the curvature radius of the vertex is a curvature radius smaller than 12.5% of the forming depth, it is found, through experiment, that wrinkles might occur in the top part 11A of the notch 11 during forming or the notch 11 might be folded, depending on the forming depth.

The opening width D of the notch 11 is more preferably equal to or more than 34% of the forming depth. Further, the curvature radius of the vertex 11Aa of the notch 11 is more preferably equal to or more than 17% of the forming depth.

Further, it is preferable that the position of the vertex 11Aa of the notch 11 be present in a range where the distance E of the aforementioned intersecting point P from the end of the side on the flange side be equal to or more than 0 times but equal to or less than 0.2 times of the length (the bottom length LA, LB) of a side of the bottom surface part 2 in the formed article 1, the side being close to a target notch. This is because, when the distance from the end of the side on the flange side becomes larger than this range, an effect of the notch 11 to accelerate the flow to the side wall 3 in the vicinity of the ridge might be lost. The aforementioned range is preferably equal to or more than 0 times but equal to or less than 0.1 times of the length of the side of the bottom surface part 2 of the formed article 1.

[Second Embodiment]

Next will be described a second embodiment.

The second embodiment has a configuration similar to the basic configuration of the first embodiment except that the press step 31 is different. The following will describe the press step 31 of the present embodiment.

In the press step 31 of the present embodiment, polygonal tube deep drawing is performed by two or more steps.

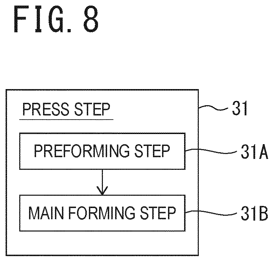

The press step 31 of the present embodiment includes, as the two or more steps of the polygonal tube deep drawing, a preforming step 31A and a main forming step 31B as a step performed after the preforming step 31A, as illustrated in FIG. 8.

<Preforming Step 31A>

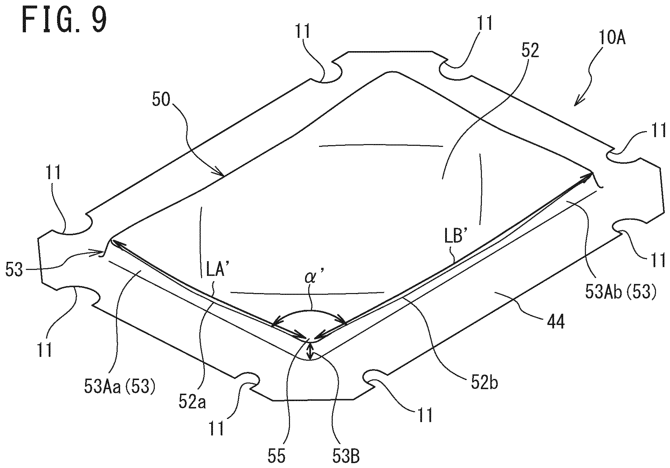

In the preforming step 31A, polygonal tube deep drawing is performed on the blank 10, to form, in the blank 10, a preforming shape 50 having a polygonal tube shape with the same number of corners (the same number of sides) as the formed article 1 and a forming depth smaller than the formed article 1, as illustrated in FIG. 9.

Note that the preforming shape 50 is set such that a length $L_A'$, $L_B'$ of a side 52a, 52b of a bottom surface part 52 is equal to or more than 0.9 times but equal to or less than 1.1 times of the length $L_A$, $L_B$ of its corresponding side of the bottom surface part 2 in the formed article 1. Note that the length of the side is defined by the length of a side on the inner side of the bottom surface part 52.

As illustrated in FIG. 9, it is preferable that the forming depth of the preforming shape 50 be shallower on a central side in the right-left direction than an end side in the right-left direction, on each side 52a, 52b of the bottom surface part 52 (a ridge between the bottom surface part 52 and a straight side part 53Aa, 53Ab). In FIG. 9, each side 52a, 52b of the bottom surface part 52 in the preforming shape 50 has a curved shape projecting downward (recessed in the pressing direction) but is not limited to this. For example, such a side shape may be employed that the forming depth on the central side of a side (for example, a central part within one third of the side) is uniform, and only in the vicinity of a corner, the forming depth is made deeper toward the vertical ridge 3B. In this case, the shape of the side 52a, 52b has a bent part on both right and left sides.

Further, it is preferable that, in the preforming shape 50, an inclination (an inclination on the inner side) of the vertical ridge 53B to the bottom surface part 52 have an inclination angle larger than an inclination of the vertical ridge 3B to the bottom surface part 2 in the formed article 1. More preferably, it is preferable that, in the preforming shape 50, an inclination of the straight side part 53A to the bottom surface part 52 have an inclination angle larger than an inclination of the straight side part 3A to the bottom surface part 2 in the formed article 1. Hereby, in the present embodiment, in the main forming step 31B, an inclination of the side wall 3 to the bottom surface part 2 in the formed article 1 can be set to an angle close to 90 degrees (the vertical).

Note that the forming depth of the preforming shape 50 should be found by CAE analysis using a computer, for example. For example, the forming depth of the preforming shape 50 is equal to or less than 80% of the forming depth of the formed article 1 as a target, preferably equal to or less than 50% thereof. Note that, when at least either of means to increase the inclination of the vertical ridge 53B to the bottom surface part 52 in the preforming shape 50 to make the vertical ridge 53B shallower and means to curve each side 52a, 52b of the bottom surface part 52 into a shape projecting downward is employed, the forming depth of the preforming shape 50 can be made deeper.

A lower limit of the forming depth of the preforming shape 50 is, for example, 20% of the forming depth of the formed article 1 as the target.

<Main Forming Step 31B>

In the main forming step 31B, polygonal tube deep drawing is performed on the blank 10 to which the preforming shape 50 is given in the preforming step 31A, so that the blank 10 has the shape of the formed article 1 as the target.

<Modification>

Here, the blank 10 to be used in the second embodiment may use a blank 10 having a shape including no notch 11, like the shape illustrated in FIG. 4.

(Operations and so on)

With the present embodiment, it is possible to manufacture the polygonal tube deep drawing formed article 1 including the flat flange 4 and having a forming depth deeper than a formed article produced by the conventional production method.

The inventors of the present invention found the following finding by performing polygonal tube deep drawing under various conditions.

This will be described with reference to FIGS. 1 and 9. Further, R in the present specification indicates a curvature radius.

The inventors obtain the following findings (1), (2).

(1) In a case where an angle $\alpha$ at a corner vertex of the bottom surface part 2 of the formed article 1 is different from R of an angle $\alpha'$ at a corner vertex of the bottom surface part 52 of the preforming shape 50, particularly as R of the angle $\alpha'$ at the vertex is larger than R of the angle $\alpha$ at the vertex, risk of cracks occurs at the point when the vertex starts to be formed to the angle $\alpha$ in the main forming.

(2) As the ridge length $L_A'$, $L_B'$ of the side of the bottom surface part 52 in the preforming shape 50 is shorter than the length $L_A$, $L_B$ of the side of the bottom surface part 2 in the formed article 1, a tensile force in a direction along the ridge of the side of the bottom surface part 2 occurs in the vertex during the main forming, so that risk of cracks occurs.

Experiments have been repeated based on such findings, and in the present embodiment, the ridge length $L_A'$, $L_B'$ of the side of the bottom surface part 52 in the preforming shape 50 is set to be equal to or more than 0.9 times but equal to or less than 1.1 times of the ridge length $L_A$, $L_B$ of the side of the bottom surface part 2 in the formed article 1, as expressed by the following inequations.

$$0.9 \times L_A \leq L_A' \leq 1.1 \times L_A$$

$$0.9 \times L_B \leq L_B' \leq 1.1 \times L_B$$

Here, in a case where the ridge length $L_A'$, $L_B'$ of the side of the bottom surface part 52 in the preforming shape 50 is less than 0.9 times of the ridge length $L_A$, $L_B$ of the side of the bottom surface part 2 in the formed article 1, an excessive tensile force might occur in the ridge direction to a shoulder corner part of the punch 23 in the main forming step 31B, and cracks might occur. Further, in a case where the ridge length $L_A'$, $L_B'$ of the side of the bottom surface part 52 in the preforming shape 50 is more than 1.1 times of the ridge length $L_A$, $L_B$ of the side of the bottom surface part 2 in the formed article 1, it is necessary to excessively provide compressive deformation to the ridge of the side to achieve a precise dimension, and there is such a concern that wrinkles occur.

More preferably, the ridge length $L_A'$, $L_B'$ of the side of the bottom surface part 52 in the preforming shape 50 is equal to or more than 0.95 times but less than 1.05 times of the ridge length $L_A$, $L_B$ of the side of the bottom surface part 2 in the formed article 1.

In addition, when the ridge length $L_A'$, $L_B'$ satisfies the above range, the preforming shape 50 does not need to be a polygonal tube shape similar to the formed article 1. That is, the bottom surface part 2 (corresponding to the bottom of the punch 23) of the preforming shape 50 does not need to be a flat surface, and the ridge of the side of the bottom surface part 2 does not also need to be a straight line.

Generally, in a case where a polygonal tube shape is formed, forming becomes more difficult as the angle of the side wall 3 to the bottom surface part 2 is closer to the vertical. In the meantime, as the angle becomes more obtuse, forming becomes easier. However, like a battery case for an electric vehicle, when a demand to make the volume of the battery case as large as possible is taken into consideration, it is desirable for the side wall 3 to be as vertical to the bottom surface part 2 as possible.

With the use of the technology of the present embodiment, when the length of the ridge satisfies the above condition at the stage of the preforming shape 50, the angle of the side wall 53 to the bottom surface part 52 in the preforming shape 50 can be made shallower than a target shape (the shape of the formed article 1). As the preforming shape 50 that satisfies this condition, the shape illustrated in FIG. 9 is conceivable, for example.

In the preforming shape 50 illustrated in FIG. 9, the side wall 3 is made shallower than the shape of the formed article 1 as the target. Further, in a case where the ridge of each side 52a, 52b of the bottom surface part 52 is a straight line, when the side wall 3 is made shallower, the length of the ridge of each side 52a, 52b of the bottom surface part 52 is shortened by just that much. This example is an example in which, in terms of the height of the ridge of each side 52a, 52b of the bottom surface part 52, the ridge is formed such that the height of a central part of the ridge is lower than the height of both right and left ends of the ridge to secure the ridge length, so that the same length as the target shape or a length similar to a target shape is achieved.

At this time, the central part of the ridge is made relatively low (relatively shallow in forming depth), so that a direction where the ridge bends is toward the die 21 side. As a result, the side of the bottom surface part 52 in the preforming shape 50 is designed to come into contact with the punch 23 earlier than the vertex (5) of the corner part and the vertical ridge 53B (3B) in the main forming.

Here, in the main forming step 31B, in a case where the punch 23 comes into contact with the vertical ridge 53B (3B) first, a strain is excessively concentrated at a contact position, and cracks might occur. In a case where the side of the bottom surface part 52 in the preforming shape 50 comes into contact with the punch 23 first, when the side of the bottom surface part 52 is designed by the above design method, the side of the bottom surface part 52 in the preforming shape 50 has a shape projecting downward on the central side thereof. Because of this, as the bottom surface part 52 is pushed upward by the punch 23 in the main forming step 31B, the side wall 53 is formed to stand. Then, when the vertical ridge 53B made shallow in the preforming shape 50 also stands outwardly along with that, the angle $\alpha'$ of the vertex 55 in the preforming shape 50 finally falls within the angle $\alpha$ of the vertex 5 in the formed article 1. At this time, when the length of the ridge of the side of the bottom surface part 52 in the preforming shape 50 achieves the aforementioned length, no stretching deformation toward the extending direction of the side of the bottom surface in the formed article 1 as the target does not occur in the main forming step 31B, so that no crack occurs.

Further, in terms of the vertical ridge 3B, the side wall 53 in the preforming shape is formed diagonally, so that the vertical ridge 53B in the preforming shape 50 can be formed longer in comparison with normal forming. Then, forming is performed in a direction where the long vertical ridge 53B in the preforming shape 50 rises. As a result, the forming depth of the formed article 1 can be made deeper only by a difference in the ridge length than that in the forming by a normal technique. Note that, in forming to be performed after the bottom of the punch 23 fits, there is such a concern that the side wall 3 cracks or the flange 4 wrinkles, similarly to the normal forming.

Further, by providing the notches 11 and performing the preforming method in combination, an effect to further deepen the forming depth is enhanced. By performing preforming in a state where the notches 11 are provided in the blank 10, the flow of the material to the corner part is also promoted even at the stage of preforming by the above effect, so that the concentration of a strain to the corner part is further restrained.

Further, in forming to be performed after the bottom of the punch 23 fits in the main forming, the forming is performable while the occurrence of cracks in the side wall 3 and wrinkles in the flange 4 is restrained by the effect of providing the notches 11 in the blank 10.

"Polygonal Tube Deep Drawing Formed article 1 Manufacturable by First and Second Embodiments"

By employing the first embodiment or the second embodiment, the polygonal tube deep drawing formed article 1 satisfying the following condition is manufacturable.

That is, the polygonal tube deep drawing formed article 1 made of the deep drawing formed article 1 in which the relationship of the curvature radius R (mm) of the corner part (the vertex 5) as a boundary between the bottom surface part 2 and the vertical ridge 3B with the forming depth h (mm) satisfies inequation (1) is manufacturable. The curvature radius R is a curvature radius on the inner side.

$$h/R \geq 4 \quad ... \quad (1)$$

Further, as the steel sheet constituting the blank 10, a plating steel sheet can be used.

By employing the plating steel sheet for the blank 10, the rust prevention property improves, and in the present embodiment, the polygonal tube deep drawing formed article 1 can be manufactured by deep drawing even without ironing. Accordingly, it is possible to provide the formed article 1 in which plating remains without peeling, more surely than a conventional technique.

As described above, with the present embodiment, it is possible to manufacture the polygonal tube deep drawing formed article 1 including the flat flange 4 and having a forming depth deeper than that manufactured by the conventional production method.

The forming depth of the formed article 1 is, for example, equal to or more than 150 mm but equal to or less than 250 mm, for example.

(Others)

This disclosure can also take the following configuration.

(1) Provided is a formed article production method for producing a formed article having a polygonal tube shape by performing polygonal tube deep drawing on a blank made of a steel sheet, the formed article including a bottom surface part having a polygonal shape, a side wall including a straight side part continuous with a side of the bottom surface part and a vertical ridge connecting ends, in a right-left direction, of adjacent straight side parts, and a flange continuous with the side wall. A side of a flange region to become the flange in the blank includes a notch, and the notch is formed in a part of the side of the flange region, the part being continuous with a part, of the straight side part, that is close to the vertical ridge, such that the notch is formed at a position on each of sides across a position to become the vertical ridge.

(2) The notch has an opening width equal to or more than 25% but equal to or less than 100% of a forming depth of the formed article, a top part of the notch has a contour shape constituted by an arcuate curved line, and the top part of the notch has a curvature radius equal to or more than 12.5% of the forming depth and equal to or less than twice the opening width of the notch.

(3) An intersecting point where a boundary line between the flange region and a region to become the straight side part intersects with a straight line extended from a vertex of the notch in a depth direction of the notch is separated from an end position, on the vertical ridge side, of the boundary line by a distance falling within a range equal to or more than 0 times but equal to or less than 0.2 times of a length of a side of the bottom surface part, the side being continuous via the straight side part with a part of the flange where the notch is formed in the formed article.

(4) Provided is a formed article production method for producing a formed article having a polygonal tube shape by performing polygonal tube deep drawing on a blank made of a steel sheet, the formed article including a bottom surface part having a polygonal shape, a side wall including a straight side part continuous with a side of the bottom surface part and a vertical ridge connecting ends, in a right-left direction, of adjacent straight side parts, and a flange continuous with the side wall. The formed article production method includes: a preforming step of performing polygonal tube deep drawing on the blank to form the blank into a preforming shape constituted by a polygonal tube shape having a forming depth shallower than the formed article; and a main step, as a post step performed after the preforming step, of performing polygonal tube deep drawing on the blank formed in the preforming shape in the preforming step, such that the blank is formed into a shape of the formed article. A side of a bottom surface part of the preforming shape has a length set to be equal to or more than 0.9 times but equal to or less than 1.1 times of a length of a corresponding side of the bottom surface part in the formed article.
Note that a blank having the notch described above may be used.

(5) Each side of the bottom surface part of the preforming shape has a forming depth to be shallower on a central side in the right-left direction than end sides in the right-left direction.

(6) An inclination of the vertical ridge to the bottom surface part in the preforming shape has an inclination angle larger than an inclination of the vertical ridge to the bottom surface part in the formed article.

(7) Provided is a blank for polygonal tube deep drawing, the blank being made of a steel sheet and used when a formed article having a polygonal tube shape is produced by performing polygonal tube deep drawing on the blank, the formed article including a bottom surface part having a polygonal shape, a side wall including a straight side part continuous with a side of the bottom surface part and a vertical ridge connecting ends, in a right-left direction, of adjacent straight side parts, and a flange continuous with the side wall. A side of a flange region to become the flange in the blank includes a notch, and the notch is formed in a part of the side of the flange region, the part being continuous with a part, of the straight side part, the part being close to the vertical ridge.

(8) Provided is a blank made of a steel sheet and used when a formed article having a polygonal tube shape is produced by performing polygonal tube deep drawing on the blank, the formed article including a bottom surface part having a polygonal shape, a side wall including a straight side part continuous with a side of the bottom surface part and a vertical ridge connecting ends, in a right-left direction, of adjacent straight side parts, and a flange continuous with the side wall. The blank has a preforming shape constituted by a polygonal tube shape having a forming depth shallower than the formed article, and a side of a bottom surface part of the preforming shape is equal to or more than 0.9 times but equal to or less than 1.1 times of a length of a corresponding side of the bottom surface part in the formed article.

(9) Provided is a polygonal tube deep drawing formed article made of a steel sheet constituted by a formed article and including a bottom surface part having a polygonal shape, a side wall including a straight side part continuous with a side of the bottom surface part and a vertical ridge connecting ends, in a right-left direction, of adjacent straight side parts, and a flange continuous with the side wall. The polygonal tube deep drawing formed article is constituted by a deep drawing formed article in which a relationship between a curvature radius R (mm) of a corner part as a boundary between the bottom surface part and the vertical ridge with a forming depth h (mm) satisfies a relationship expressed by inequation (1):

$$h/R \geq 4 \ \dots \ (1).$$

(10) In the polygonal tube deep drawing formed article, the steel sheet is a plating steel sheet.

Examples

Next will be described examples based on the present embodiment.

(Verification of Examples)

In the present examples, FIG. 1 is assumed as the shape of the formed article 1 as a target. The formed article 1 has a rectangular shape with a short side of 900 nm and a long side of 1400 nm as respective lengths of sides of the bottom surface part 2. Further, the forming depth is 200 mm.

(Comparative Example)

The blank 10 was formed by normal polygonal tube deep drawing such that the blank 10 had a shape without the notches 11 as illustrated in FIG. 4, and a steel sheet of JSC270D and with a plate thickness of 0.8 mm was used as the material for the blank 10. In the case of this forming, the forming depth of 200 mm was not achievable, and when the forming depth reached 110 mm, cracks occurred.

(Invention Example 1)

Subsequently, as the blank 10, a blank obtained by adding the notches 11 to the blank 10 illustrated in FIG. 4 was used as illustrated in FIG. 5. Then, the blank was subjected to normal polygonal tube deep drawing.

In the present example, the straight line 49 extended in the depth direction of the notch 11 from the vertex 11Aa of the notch 11 was set to be directed to the vicinity of a part to become the vertex of the vertical ridge 3B. Further, the opening width D of the notch 11 was set to 120 mm that is 60% of a target forming depth, and the depth of the notch 11 was set to 70 mm that is 35% of a target forming depth of 200 mm.

In the case of the forming in this invention example, the forming depth was 135 mm, and the forming depth was improved by 25 mm in comparison with the comparative example.

(Invention Example 2)

In Invention Example 2, after the preforming shape 50 as illustrated in FIG. 9 was given to the blank 10, deep drawing was performed to form the blank 10 into the shape of the formed article 1 as a target. Note that, in FIG. 9, the blank 10 is provided with the notches 11. However, in Invention Example 2, the blank 10 provided with no notch 11 was used as the blank 10. The other configurations of the blank 10 were designed similarly to the comparative example.

The preforming shape 50 was designed such that the lengths of sides of the bottom surface part 2 were equal the lengths of sides of the bottom surface part 2 in the formed article 1. Further, the forming depth of the preforming shape 50 was designed to fall within a range from 20% to 50% of the forming depth of the main forming.

In the forming of Invention Example 2, the forming depth was 155 mm, and the forming depth was improved by 45 mm in comparison with the comparative example.

(Invention Example 3)

As Invention Example 3, the formed article 1 was formed by the method of Invention Example 2, except that the notches 11 described in Invention Example 1 were provided in the blank 10.

In Invention Example 3, it was confirmed that no crack had occurred until the forming depth reached 200 mm. In comparison with at least the comparative example, the forming depth was improved by at least 90 mm.

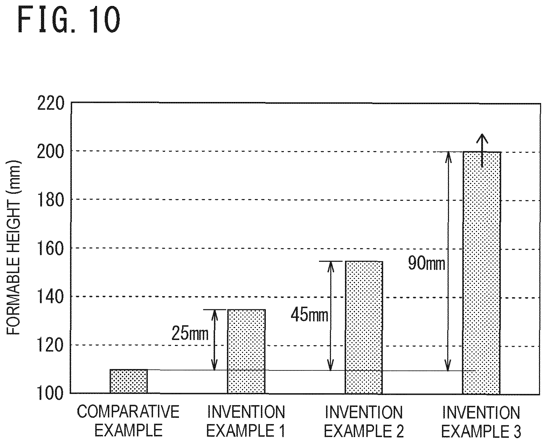

The evaluation is illustrated in FIG. 10.

As can be seen from FIG. 10, even in a case where the notches 11 were formed in the blank 10, or even in a case where the preforming shape 50 were given, it was found that the forming depth could be deepened in comparison with the comparative example. Further, it is found that, when the notches 11 are formed in the blank 10, and the preforming shape 50 is given to the blank 10, the forming depth could be further deepened.

Here, Japanese Patent Application No. 2021-026615 (filed on February 22, 2021) to which the present application claims priority is incorporated herein by reference in its entirety. Herein, the present invention has been described referring to a limited number of embodiments, but the scope of the present invention is not limited to them, and it is obvious for a person skilled in the art that the embodiments are modifiable based on the disclosure.

Reference Signs List

1 formed article
2 bottom surface part
2a, 2b side
3 side wall
3A, 3Aa, 3Ab straight side part
3B vertical ridge
4 flange
10 blank
10a cut part
11 notch
20 blank holder
21 die
23 punch
30 notch forming step
31 press step
31A preforming step
31B main forming step
32 trim step
44 flange region
46 boundary line
49 depth-direction straight line
50 preforming shape
52 bottom surface part
52a, 52b side
53 side wall
53A, 53Aa, 53Ab straight side part
53B vertical ridge
D opening width

E distance
P intersecting point

**Claims**

1. A formed article production method for producing a formed article having a polygonal tube shape by performing polygonal tube deep drawing on a blank made of a steel sheet, the formed article including a bottom surface part having a polygonal shape, a side wall including a straight side part continuous with a side of the bottom surface part and a vertical ridge connecting ends, in a right-left direction, of adjacent straight side parts, and a flange continuous with the side wall, wherein:

   a side of a flange region to become the flange in the blank includes a notch; and
   the notch is formed in a part of the side of the flange region, the part being continuous with a part of the straight side part that is close to the vertical ridge, such that the notch is formed at a position on each of sides across a position to become the vertical ridge.

2. The formed article production method according to claim 1, wherein:

   the notch has an opening width equal to or more than 25% but equal to or less than 100% of a forming depth of the formed article;
   a top part of the notch has a contour shape constituted by an arcuate curved line; and
   the top part of the notch has a curvature radius equal to or more than 12.5% of the forming depth and equal to or less than twice the opening width of the notch.

3. The formed article production method according to claim 1 or 2, wherein:
   an intersecting point where a boundary line between the flange region and a region to become the straight side part intersects with a straight line extended from a vertex of the notch in a depth direction of the notch is separated from an end position, on the vertical ridge side, of the boundary line by a distance falling within a range equal to or more than 0 times but equal to or less than 0.2 times of a length of a side of the bottom surface part, the side being continuous via the straight side part with a part of the flange where the notch is formed in the formed article.

4. A formed article production method for producing a formed article having a polygonal tube shape by performing polygonal tube deep drawing on a blank made of a steel sheet, the formed article including a bottom surface part having a polygonal shape, a side wall including a straight side part continuous with a side of the bottom surface part and a vertical ridge connecting ends, in a right-left direction, of adjacent straight side parts, and a flange continuous with the side wall, the formed article production method comprising:

    a preforming step of performing polygonal tube deep drawing on the blank to form the blank into a preforming shape constituted by a polygonal tube shape having a forming depth shallower than the formed article; and

    a main step, as a post step performed after the preforming step, of performing polygonal tube deep drawing on the blank formed into the preforming shape in the preforming step, such that the blank is formed into a shape of the formed article, wherein:

    a side of a bottom surface part of the preforming shape has a length set to be equal to or more than 0.9 times but equal to or less than 1.1 times of a length of a corresponding side of the bottom surface part in the formed article.

5. The formed article production method according to claim 4, wherein:
each side of the bottom surface part of the preforming shape has a forming depth to be shallower on a central side in the right-left direction than end sides in the right-left direction.

6. The formed article production method according to claim 4 or 5, wherein:
an inclination of the vertical ridge to the bottom surface part in the preforming shape has an inclination angle larger than an inclination of the vertical ridge to the bottom surface part in the formed article.

7. The formed article production method according to any one of claims 4 to 6, wherein:
the blank including the notch according to any one of claims 1 to 3 is used.

8. A blank for polygonal tube deep drawing, the blank being made of a steel sheet and used when a formed article having a polygonal tube shape is produced by performing polygonal tube deep drawing on the blank, the formed article including a bottom surface part having a polygonal shape, a side wall including a straight side part continuous with a side of the bottom surface part and a vertical ridge connecting ends, in a right-left direction, of adjacent straight side parts, and a flange continuous with the side wall, wherein:

    a side of a flange region to become the flange in the blank includes a notch; and
the notch is formed in a part of the side of the flange region, the part being continuous with a part of the straight side part, the part being close to the vertical ridge.

9. A blank for polygonal tube deep drawing, the blank being made of a steel sheet and used when a formed article having a polygonal tube shape is produced by performing polygonal tube deep drawing on the blank, the formed article including a bottom surface part having a polygonal shape, a side wall including a straight side part continuous with a side of the bottom surface part and a vertical ridge connecting ends, in a right-left direction, of adjacent straight side parts, and a flange continuous with the side wall, wherein:

    the blank has a preforming shape constituted by a polygonal tube shape having a forming depth shallower than the formed article; and
a side of a bottom surface part of the preforming shape has a length equal to or more than 0.9 times but equal to or less than 1.1 times of a length of a corresponding side of the bottom surface part in the formed article.

10. A polygonal tube deep drawing formed article including a bottom surface part having a polygonal shape, a side wall including a straight side part continuous with a side of the bottom surface part and a vertical ridge connecting ends, in a right-left direction, of adjacent straight side parts, and a flange continuous with the side wall, the polygonal tube deep drawing formed article being made of a steel sheet, wherein:
the polygonal tube deep drawing formed article is constituted by a deep drawing formed article in which a relationship between a curvature radius R (mm) of a corner part as a boundary between the bottom surface part and the vertical ridge with a forming depth h (mm) satisfies a relationship expressed by inequation (1):

$$h/R \geq 4 \ \dots \ (1).$$

11. The polygonal tube deep drawing formed article according to claim 10, wherein:
the steel sheet is a plating steel sheet.

FIG. 1

FIG. 2

FIG. 3

```
┌─────────────────────────┐
│   NOTCH FORMING STEP     │～30
└─────────────────────────┘
            │
            ▼
┌─────────────────────────┐
│       PRESS STEP         │～31
└─────────────────────────┘
            │
            ▼
┌─────────────────────────┐
│       TRIM STEP          │～32
└─────────────────────────┘
```

FIG. 4

FIG. 5

EP 4 282 553 A1

FIG. 6A

3Aa
(3A)

5  3B

3Ab
(3A)

4

FLOW RATE : SMALL

FLOW RATE : SMALL

FLOW RATE : LARGE

FIG. 6B

3Aa
(3A)

3Ab
(3A)

4

COMPRESSIVE STRESS OCCURS

WRINKLE OCCURS

5

3B

FIG. 7A

FIG. 7B

# FIG. 8

```
┌─────────────────────────────────┐
│ PRESS STEP               ~31     │
│  ┌──────────────────┐            │
│  │ PREFORMING STEP  │   ~31A     │
│  └──────────────────┘            │
│           ↓                      │
│  ┌──────────────────┐            │
│  │ MAIN FORMING STEP│   ~31B     │
│  └──────────────────┘            │
└─────────────────────────────────┘
```

# FIG. 9

FIG. 10

## INTERNATIONAL SEARCH REPORT

International application No.

**PCT/JP2021/039478**

### A. CLASSIFICATION OF SUBJECT MATTER

***B21D 22/20***(2006.01)i; ***B21D 22/26***(2006.01)i; ***B21D 53/00***(2006.01)i
FI:   B21D22/26 C; B21D22/20 E; B21D53/00 D

According to International Patent Classification (IPC) or to both national classification and IPC

### B. FIELDS SEARCHED

Minimum documentation searched (classification system followed by classification symbols)

B21D22/20; B21D22/26; B21D53/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2014-213346 A (JFE STEEL CORP) 17 November 2014 (2014-11-17)<br>entire text, all drawings | 1-11 |
| A | JP 1-317630 A (TOYOTA MOTOR CORP) 22 December 1989 (1989-12-22)<br>entire text, all drawings | 1-11 |
| A | JP 2008-036658 A (TOYOTA AUTO BODY CO LTD) 21 February 2008 (2008-02-21)<br>entire text, all drawings | 1-11 |
| A | JP 2009-136880 A (TOTTORI UNIV) 25 June 2009 (2009-06-25)<br>entire text, all drawings | 1-11 |
| A | JP 1-233020 A (NISSHIN STEEL CO LTD) 18 September 1989 (1989-09-18)<br>entire text, all drawings | 1-11 |
| A | JP 2013-206678 A (SANYO ELECTRIC CO LTD) 07 October 2013 (2013-10-07)<br>entire text, all drawings | 1-11 |
| A | WO 2020/045627 A1 (TOYO KOHAN CO LTD) 05 March 2020 (2020-03-05)<br>entire text, all drawings | 1-11 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 December 2021** | **11 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2021/039478**

| Patent document cited in search report | | | Publication date (day/month/year) | Patent family member(s) | Publication date (day/month/year) |
|---|---|---|---|---|---|
| JP | 2014-213346 | A | 17 November 2014 | (Family: none) | |
| JP | 1-317630 | A | 22 December 1989 | (Family: none) | |
| JP | 2008-036658 | A | 21 February 2008 | (Family: none) | |
| JP | 2009-136880 | A | 25 June 2009 | (Family: none) | |
| JP | 1-233020 | A | 18 September 1989 | (Family: none) | |
| JP | 2013-206678 | A | 07 October 2013 | (Family: none) | |
| WO | 2020/045627 | A1 | 05 March 2020 | CN 112639171 A entire text, all drawings | |

Form PCT/ISA/210 (patent family annex) (January 2015)

EP 4 282 553 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6787013 B
- JP H866730 A
- JP 5867657 B
- JP 2021026615 A